# EUROPEAN PATENT APPLICATION

(11) **EP 1 213 320 A1**
(43) Date of publication of application: **12.06.2002**
(21) Application number: 01127398.4
(22) Date of filing: 23.11.2001
(51) Int. Cl.: C08J 7/06, C08L 69/00

(54) **Tinted plastic articles and thermoplastic composition for its preparation**

(30) Priority: 05.12.2000 US 730367
(71) Applicant: Bayer Corporation, Pittsburgh, PA 15205-9741 (US)
(72) Inventor: Krishnan, Sivaram, Ann Arbor, MI 48105 (US); Pyles, Robert A., Bethel Park, PA 15102 (US); Archey, Rick L., Pleasant Hills, PA 15236 (US); Johnson, James B., Washington, PA 15301 (US)
(74) Representative: Klimiuk-Japadita, Meike

(57) **Abstract**

A thermoplastic molding composition comprising a transparent resinous component suitable for tinting by dip-dye method is disclosed. The resinous component is selected from the group consisting of (i) a blend of (co)polycarbonate resin and (co) polycaprolacone, and (ii) a copolymer containing carbonate and caprolactone structural units. The composition, characterized in that it is free of photochromic colorants, may be molded by thermoplastic means, and the molded article is then dippeddyed by immersion in a tinting solution. The tinted articles are suitable for making, among others, optical lenses.

## Description

### Field of the Invention:

This invention is directed to a thermoplastic molding composition, to a method for making a tintable article therefrom and to the tinted article. More particularly the invention is directed to a molding composition, the resinous component of which contains structural units derived from aromatic polycarbonate and units derived from polycaprolactone, a method of making a dip-dyed molded article that contains the component and to the dyed article thus made.

### TECHNICAL BACKGROUND

Polycarbonate resin is well known for its excellent mechanical and optical properties. It is readily available in commerce and has been used in a wide variety of applications, including the preparation of optical lenses. Thermosetting polycarbonate resin is known to differ from its thermoplastic counterpart in terms of properties, applications and method of making. Articles made of thermosetting polycarbonate may be tinted by dipping (or by immersion) in a suitable solution that contains dye (or tint). This so called "dip-dye" method is carried out under time and temperature conditions that are conducive to diffusion and results in the formation of a near-surface tinted section. Depending on the desired degree of tinting and on the chemistry of the plastic matrix, the diffusion could require up to about an hour. A commercial product that is available from PPG under the name CR-39 is a thermosetting aliphatic polycarbonate (diethylene glycol bis(allyl carbonate)) which is reportedly tintable by this method. In contrast, corresponding articles that are molded of thermoplastic aromatic polycarbonate have not been successfully tinted by this dip-dye tinting method.

Tinted optical lenses such as for use in spectacles and in sunglasses are widely used. These are useful for both aesthetic/fashion reasons and for the purpose of protecting the eye against the harmful effects of UV light. In the case of the later, the tint used in the lens acts so as to block or limit the transmission of UV light.

In this connection, it would be noted here that only a portion of the UV spectrum of electromagnetic radiation is harmful to the human eye. The harmful regions of ultraviolet radiation are the UVB region (radiation in the range of 290 to 315 nm) and UVA region (radiation ranging from 315 to 380 nm). The shorter wave-lengths, in the UVB region, are significantly more damaging to the cornea of the eye.

The preparation of a colored thermosetting polycarbonate article, including eyeglass and optical lenses with high impact resistance was disclosed in U.S. Patent 4,812,142. Articles made of thermosetting polycarbonate were dyed by immersion in a solvent that contained dye. In accordance with this document, the resin is produced by placing liquid polycarbonate monomer (undyed) and an initiator, usually an organic peroxide, e.g., isopropyl peroxide, in a mold and is then polymerized. The article to be dyed is kept in the dye solution that is maintained at a temperature of about 200°F until sufficient dye has penetrated the thermosetting polycarbonate. The tinted article is then removed, rinsed and dried. The dyeing operation is said to detract nothing from impact resistance of the article and the dyed product is said to exhibit excellent ultraviolet light stability.

A method for producing a photochromic plastic lens, said to be applicable to polycarbonate, is disclosed in CA 2,095,703. In the process, the lens is immersed in a high boiling organic solvent bath containing the dye and is exposed to microwave heating. All the examples in this publication refer to CR-39, a thermosetting polycarbonate.

U.S. Patent 5,998,520 is noted for the disclosure of a photochromic composition having improved fade rate. The composition contains a presently relevant resinous component.

### SUMMARY OF THE INVENTION

A thermoplastic molding composition comprising a transparent resinous component suitable for tinting by dip-dye method is disclosed. The resinous component is selected from the group consisting of (i) a blend of (co)polycarbonate resin and (co) polycaprolacone, and (ii) a copolymer containing carbonate and caprolactone structural units. The composition, characterized in that it is free of photochromic colorants, may be molded by thermoplastic means, and the molded article is then dipped-dyed by immersion in a tinting solution. The tinted articles are suitable for making, among others, optical lenses.

### DETAILED DESCRIPTION OF THE INVENTION

The inventive thermoplastic molding composition comprise at least one transparent resinous component selected from the group consisting of
(i) a blend of (co)polycarbonate resin and (co) polycaprolacone, and
(ii) a copolymer containing carbonate and caprolactone structural units.

The composition is characterized in that it contains no photochromic dye.

In an additional embodiment, the invention concerns a method of using the inventive composition comprising thermoplastically molding an article and immersing the molded article in a solution containing a dye, to form a tinted article. Throughout the present text, the terms "tint" and "tinted" will be used to refer to "dye" and "dyed".

In a yet additional embodiment, the invention is directed to the tinted article made by the inventive method. The inventive thermoplastically molded article comprises a near-surface region that contains a dye. The size of the region, its thickness and the amount of dye contained therein is calculated to impart tinting to the article.

Throughout the text of this application reference is made to "tinting", "tinting bath" and "tinted articles" but, as will be described below, the inventive method was found to be suitable for modifying properties of molded articles generally. This embodiment of the invention is directed to dipping the molded article in a bath that contains functional agents/performance additives that are incorporated in the near surface regions of the molded article by diffusion. Therefore, in all appropriate instances throughout this text, the term "tinting" and "tinted" needs to be understood broadly to cover these functions brought about by performance additives generally.

Further, while the invention is described with particular focus on its applicability to the making of optical lenses, it will be understood that other articles that are thermoplastically molded may be similarly made. It will further be understood that the terms "optical lenses" and "lenses" as used herein to refer generally to protective eyewear, especially, spectacles, sunglasses and goggles and the like.

For clarification: in the first embodiment of the invention entailing a blend, the (co)polycarbonate component may include copolymer(s) containing carbonate and caprolactone structural units.

Referring first to the embodiment directed to a molding composition, the blend contains about 1 to 40, preferably 5 to 35 percent of (co) polycaprolactone and 99 to 60, preferably 95 to 65 percent of (co)polycarbonate (the percent being relative to the weight of the blend). The (co)polycarbonates within the scope of the present invention are homopolycarbonates, copolycarbonates, branched polycarbonate resins and mixtures thereof. Such (co)polycarbonate resins are known and their structure and methods of preparation have been disclosed, for example in U.S. Patents 3,030,331; 3,169,121; 3,395,119; 3,729,447; 4,255,556; 4,260,731; 4,369,303 and 4,714,746, all of which are incorporated by reference herein.

The (co)polycarbonate resins generally have a weight average molecular weight of 10,000 to 200,000, preferably 20,000 to 80,000 and their melt flow rate, per ASTM D-1238 at 300°C, is about 1 to about 85 g/10 min., preferably about 2 to 21 g/10 min. These resins may be prepared by the known diphasic interface process from a carbonic acid derivative such as phosgene and one or more dihydroxy compounds by polycondensation (see German Offenlegungsschriften 2,063,050; 2,063,052; 1,570,703; 2,211,956; 2,211,957 and 2,248,817; French Patent 1,561,518; and the monograph H. Schnell, "Chemistry and Physics of Polycarbonates", Interscience Publishers, New York, New York, 1964, all incorporated herein by reference).

Dihydroxy compounds suitable in the present context conform to the structural formulae (1) or (2). 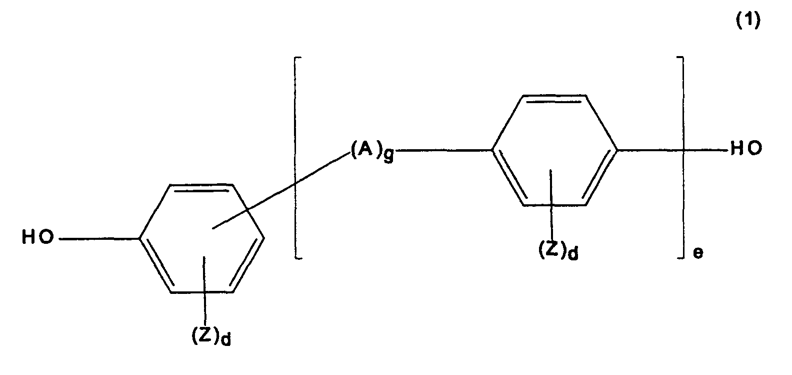 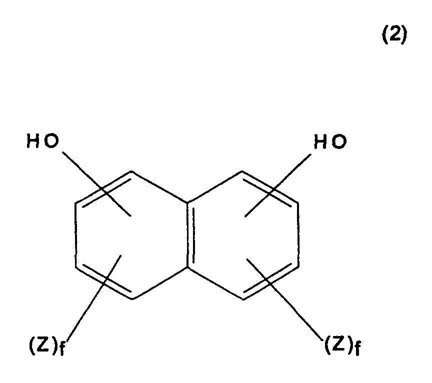 wherein A denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom, a sulfur atom, -SO- or -SO₂- or a radical conforming to 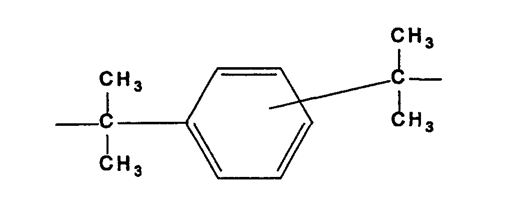 and e and g both denote the number 0 to 1; Z denotes F, Cl, Br or C₁-C₄-alkyl and if several Z radicals are substituents in one aryl radical, they may be identical or different from one another; d denotes an integer of from 0 to 4; and f denotes an integer of from 0 to 3.

Included among the useful dihydroxy compounds are hydroquinone, resorcinol, bis-(hydroxyphenyl)-alkanes, bis-(hydroxyphenyl)-ethers, bis-(hydroxyphenyl)-ketones, bis-(hydroxyphenyl)-sulfoxides, bis-(hydroxyphenyl)-sulfides, bis-(hydroxyphenyl)-sulfones, 2,2,4-trimethylcyclohexyl-1,1-diphenol and α,α-bis-(hydroxyphenyl)-diisopropylbenzenes, as well as their nuclear-alkylated compounds. These and further suitable aromatic dihydroxy compounds are described, for example, in U.S. Patents 3,028,356; 2,999,835; 3,148,172; 2,991,273; 3,271,367; and 2,999,846, all incorporated herein by reference.

Further examples of suitable dihydroxy compounds are 2,2-bis-(4-hydroxyphenyl)-propane (bisphenol A), 2,4-bis-(4-hydroxyphenyl)-2-methyl-butane, 1,1-bis-(4-hydroxyphenyl)-cyclohexane, α,α'-bis-(4-hydroxyphenyl)-p-diisopropylbenzene, 2,2-bis-(3-methyl-4-hydroxyphenyl)-propane, 2,2-bis-(3-chloro-4-hydroxyphenyl)-propane, bis-(3,5-dimethyl-4-hydroxyphenyl)-methane, 2,2-bis-(3,5-dimethyl-4-hydroxy-phenyl)-propane, bis-(3,5-dimethyl-4-hydroxyphenyl)-sulfide, bis-(3,5-dimethyl-4-hydroxyphenyl)-sulfoxide, bis-(3,5-dimethyl-4-hydroxyphenyl)-sulfone, dihydroxy-benzophenone, 2,4-bis-(3,5-dimethyl-4-hydroxyphenyl)-cyclohexane, α,α'-bis-(3,5-dimethyl-4-hydroxyphenyl)-p-diisopropylbenzene, 2,2,4-trimethyl cyclohexyl-1,1-diphenol and 4,4'-sulfonyl diphenol. Examples of the particularly preferred dihydroxy compounds are 2,2,-bis-(4-hydroxyphenyl)-propane, 2,2-bis-(3,5-dimethyl-4-hydroxyphenyl)-propane, 2,2,4-trimethyl cyclohexyl-1,1-diphenol and 1,1-bis-(4-hydroxyphenyl)-cyclohexane. The most preferred (co)polycarbonate is one derived at least in part from bisphenol is 2,2-bis-(4-hydroxyphenyl)-propane (bisphenol A).

Further suitable in the practice of the invention are phenolphthalein-based (co)polycarbonates such as are described in U.S. Patents 3,036,036 and 4,210,741, both incorporated by reference herein.

The (co)polycarbonates suitable in the present context may be linear or branched. Branching is obtained by co-condensing small quantities, e.g., 0.05 to 2.0 mol% (relative to the bisphenols) of polyhydroxyl compounds. Polycarbonates of this type have been described, for example, in German Offenlegungsschriften 1,570,533; 2,116,974 and 2,113,374; British Patents 885,442 and 1,079,821 and U.S. Patent 3,544,514. The following are some examples of polyhydroxyl compounds which may be used for this purpose: phloroglucinol; 4,6-dimethyl-2,4,6-tri-(4-hydroxyphenyl)-heptane; 1,3,5-tri-(4-hydroxyphenyl)-benzene; 1,1,1-tri-(4-hydroxyphenyl)-ethane; tri-(4-hydroxyphenyl)-phenylmethane; 2,2-bis-[4,4-(4,4'-dihydroxydiphenyl)]-cyclohexyl-propane; 2,4-bis-(4-hydroxy-1-isopro-pylidine)-phenol; 2,6-bis-(2'-dihydroxy-5'-methylbenzyl)-4-methyl-phenol; 2,4-dihydroxybenzoic acid; 2-(4-hydroxyphenyl)-2-(2,4-dihydroxy-phenyl)-propane and 1,4-bis-(4,4'-dihydroxy-triphenylmethyl)-benzene. Some of the other polyfunctional compounds are 2,4-dihydroxybenzoic acid, trimesic acid, cyanuric chloride and 3,3-bis-(4-hydroxyphenyl)-2-oxo-2,3-dihydroindole.

In addition to the preferred, interfacial polycondensation process mentioned above, other processes for the preparation of the (co)polycarbonates of the invention are polycondensation in a homogeneous phase and transesterification. These processes are disclosed in the incorporated herein by reference U.S. Patents 3,028,365; 2,999,846; 3,153,008; and 2,991,273. Other methods of synthesis in forming the (co)polycarbonates of the invention such as disclosed in U.S. Patent 3,912,688, incorporated herein by reference, may also be used.

Suitable (co)polycarbonate resins are available in commerce, for instance, under the trademark Makrolon, from Bayer Corporation, of Pittsburgh, Pennsylvania.

The (co)polycaprolactone constituent of the inventive blend (herein "PCL") is a linear polyester formed through the ring opening reaction of ε-caprolactone. It is characterized in having molecular weights (weight average) of up to about 250,000, preferably 25,000 to 150,000, most preferably 30,000 to 100,000. PCL preferably has a reduced viscosity (measured with 0.2 g of polymer in 100 milliliter benzene at 30°C) of about 0.1 to 1.5, more preferably about 0.5 to 0.9.

The molecular structure of the suitable PCL contains structural units conforming to

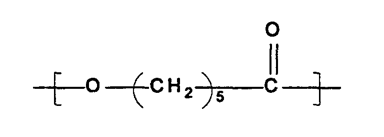

Suitable PCL are partially crystalline resins including Tone Polymers P-767 and P-787 that are available from Union Carbide; also suitable are Solvay's products CAPA 640, CAPA 650 and CAPA 680. This linear polyester of 2-oxepanone with 1,4-butanediol (polyester of epsilone caprolactone with 1,4-butanediol) has molecular weight (weight average) of about 37,000 and a softening temperature of about 58-60°C.

The preparation of blends suitable in the present context is carried out conventionally following procedures that are well known in the thermoplastic art.

In the embodiments of (ii) above, the transparent resinous component is a block or random (carbonate-lactone)copolymer (hereinafter referred to as "carbonate-lactone copolymer") having a weight average molecular weight of at least 10,000, preferably 20,000 to 80,000, and containing about 1 to 50, preferably 10 to 40 mole percent of structural units conforming to 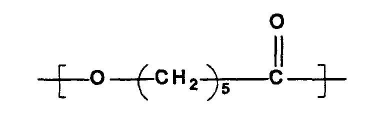 and 99 to 50, preferably 90 to 60 mole percent of carbonate structural units, the percent being relative to the total molar amount of lactone and carbonate structural units. The carbonate structural units are derived from at least one of the aromatic dihydroxy compounds referred to above in connection with (co)polycarbonates. The preparation of carbonate-lactone copolymer is conventional and follows the procedures well known in the polycarbonate art.

Also, the processing and thermoplastic molding of the transparent blend and/or carbonate-lactone copolymer of the invention are well known in the art.

Both embodiments of the invention, the one entailing a blend as the resinous component and the one entailing a copolycarbonate, it is possible to use certain polyesters in, at least partial, replacement of PCL. Example 2 herein below is demonstrative.

The thermoplastically molded article, molded of the inventive composition, is tinted by the known dip-dye method. The article may be tinted by immersion in a liquid bath that contains a colorant. The inventive method of the present invention is applicable for the preparation of a variety of tinted articles, including optical lenses as well as housings for a household appliances, housings for telephones, housings for computers and lighting fixtures.

The tinting, according to the invention, is applied to clean articles and, if necessary, the articles may be subjected to a preliminary cleansing operation and optionally to a pretreatment with a surfactant. A clean article may, before being immersed in a tinting solution, be suitably conditioned by immersing it in an aqueous solution of a suitable surfactant. Suitable surfactants are effective in lowering the surface tension on the surfaces of the article to be tinted. One suitable surfactant is available from BASF under the trademark KIRALON-OL. Another suitable surfactant is Lens Prep II that is available from BPI. The surface conditioning may be carried out at room temperature or at a higher temperature. In either case, the article may be immersed in the surfactant solution for up to a minute and then removed and immersed directly into the dye solution.

The liquid may contain the colorant in the form of an aqueous solution of a water-soluble colorant. In the case of water insoluble colorants, care must be taken to avoid solvents or media that may damage the integrity of the molded article. It is suitable in many cases to use a dispersion of the colorant in mineral oil, such as, NF/USP pharmaceutical grade, also known as "white mineral oil".

The tinting bath contains a tinctorial amount of the selected dye or pigment. Included within the scope of the suitable dyes are the electrochromic and thermochromic varieties that are well known to the skilled in the art and are readily available in commerce.

Typically, it may contains about 1 to 25%, preferably 2 to 10% of at least one dye (the percents being relative to the weight of the bath). U.S. Patents 3,864,077 and 4609375, both incorporated herein by reference, disclose the dip dye method for tinting plastics. The colorants suitable for use in the present context include both dyes and colorants, except for photochromic colorants. Normally, the colorants are water-soluble but other colorants are also suitable. Among the suitable colorants mention may be made of dyes known as dispersed dyes. Included within this class of dyes are colors of the azo, azomethine, nitroarene and anthraquinone structures. Among the suitable azo dyes included are products of Ciba-Geigy Dyes Ltd under the trademark CIBACET. The azo dyes include red, blue and yellow colors that may be combined by the art-skilled to make a full range of colors.

It will be understood that the dyes useful in the practice of the present invention are not limited to these classes of compounds. The dyes or pigments used in the practice of this invention may be identified by their chemical names, for example: 3.nitro-N4-phenylsulfanilanilide, a yellow dye; p-[p-(phenylazo)phenylazo]-phenol, a red-yellow dye; ethyl-4-hydroxy-1-anthraquinone carbamate (an orange dye); 1-amino-4-hydroxyanthraquinone, a red dye; 1-amino-2-bromo-4-hydroxyanthraquinone, a red-blue dye or 4,5-diamonochrysazin, a blue dye.

Alternatively suitable dyes may be identified in accordance with standard chemical handbooks, such as "The Color Index," third edition, The Society of Dyes and Colors and the American Association of Textile Chemists and Colorists (1971). Typical of such colorants, which can be used in the practice of this invention, are Solvent Orange 20; Acid Blue 83 (C.I. 42660); Acid Blue 59 (C.I. 50315); Direct Blue 86 (C.I. 74180); Direct Red 81 (C.I. 28160) and Acid Yellow 36 (C.I. 13065). Cationic dyestuffs can also be used in the practice of this invention, for example, Rhodamine 6G and Rhodamine B. Also included are crude nonionic dyes such as Disperse Yellow 3, Disperse Orange 30, Disperse Red 55:1, Disperse Blue 56, solvent nonionic dyes such as Solvent Yellow 93, Solvent Orange 60, Solvent Red 52, Solvent Blue 59 and Solvent 1:2 and premetalized dyes such as Solvent Yellow 83:1, Solvent Orange 54 and Solvent Red 22.

In a yet additional embodiment of the invention, dipping an article molded of the inventive composition in a suitable bath brings about modified properties. Accordingly, this embodiment entails a dipping bath that comprises performance additives, also known as "functional agents". These functional agents may be included in the bath in addition to or, in at least partial replacement of, the tinting /coloring agents. Functional agents include compounds that, by their incorporation by diffusion to the near surface regions of the molded article, modify the properties of the article. Included among these functional additives are UV stabilizers such as benzotriazoles, benzophenones, including such as are available from CIBA-Geigy under the trademark Tinuvin. Other functional agents/performance additives include flame retardant agents, thermal and hydrolysis stabilizers optical brighteners, scents and fragrances. These may be added to the dipping bath in such concentrations as are suitable for modifying the surface of the molded article by diffusion into its near-surface regions. Such suitable functional agents are known to the art-skilled.

Immersion of the molded article in the dye bath for periods of 5 minutes at 80°C was shown to result in considerable diffusion and to provide significant tinting. However, for even faster results, the tinting may be done at moderately elevated temperatures, obviously lower than the softening temperature of the article to be thus tinted.

The thus dyed article is normally cleaned with a solvent such as water or methanol to remove excess dye.

In tinting the articles in accordance with the invention, a dispersion of a tinting dye or pigment (herein "tint"), in an aqueous or non aqueous media, is prepared, containing an amount of pigment calculated to yield a desired intensity of color. The article, optionally pretreated as described above, is immersed in the dispersion, optionally at a temperature of up to about 100, preferably 80 to 95°C. Heating may be carried out by any conventional means including exposure to microwave energy. The temperature of the dispersion is determined by the desired rate of diffusion, or the rate of production: the higher the temperature the shorter the time required to reach a predetermined level of tinting. The article may be kept in the dispersion for a predetermined time necessary to achieve a desired intensity of tint.

The dispersion of tinting agent may optionally contain a surfactant such as the one mentioned above.

The total light transmittance (TLT) of the article tinted, in accordance with the present invention, varies with the depth of dyeing which, in turn, is a function of the materials and conditions employed.

The invention is further illustrated but is not intended to be limited by the following examples in which all parts and percentages are by weight unless otherwise specified.

### EXPERIMENTAL

### Example 1

In a series of experiments, the results of which are summarized in Table 1, demonstrating an embodiment of the invention, polycarbonate resin (Makrolon 2608 resin, a homopolymer based on bisphenol A, and having a MFR value of about 12 gm/10 min.) was blended with the indicated amounts of PCL (CAPA 640 from Solvay) to produce molding compositions. Each of these compositions was used in molding discs of about 4 inches in diameter and 0.125" in thickness by conventional injection molding technique. The molded articles were first dipped in a surfactant (Preparation 2 for Plastics, a product of BPI) at 82°C for 30 sec. The thus conditioned discs were then immersed in an aqueous solution that contained water soluble black dye (46300 from BPI products). The solution temperature was about 82°C and the duration of the immersion was 30 minutes. The solution was prepared by mixing 3 oz. of dye per 1 liter of water. The discs were not rinsed before tinting.

The light transmission, determined in accordance with ASTM -1003 relative to the articles thus dyed is indicated below.

**Table 1**

| PCL content, (%) | 1 | 2 | 3 | 4 | 5 | 6 | 7 | 8 |
|---|---|---|---|---|---|---|---|---|
| %TLT⁽ⁱ⁾ | 91.5 | 91.9 | 91.9 | 91.9 | 91.4 | 90.2 | 90.0 | 88.8 |
| %TLT⁽ⁱⁱ⁾ | 86.8 | 86.9 | 86.3 | 84.8 | 83.5 | 81.7 | 69.4 | 33.7 |
| ΔTOT | 4.7 | 5.0 | 5.6 | 7.1 | 7.9 | 8.5 | 20.6 | 55.1 |

| | | | | | | | | |
|---|---|---|---|---|---|---|---|---|
| (i) total light transmission before dying | | | | | | | | |
| (ii) total light transmission after dying. | | | | | | | | |

### Example 2

In an additional experiment a composition containing 70% polycarbonate and 30% PCTG, was used in making a tinted article. The preparation of the composition, the molding and tinting procedures followed the same procedures as noted above in Example 1. The corresponding optical data were determined as follows:% TLT 53%, UVB = 0% and UVA = 16%.

### Examples 3- 13

The optical properties of an additional series of compositions were determined as shown below. In this series, compositions containing Makrolon 2608 and PCL (CAPA 640) were prepared, articles molded therefrom and tinted following the procedure noted above. The optical properties of the tinted articles were determined as shown in the table below:

**Table 2**

| Ex. | PCL (%) | Pre-tinting | | Tinted articles | | | UVA | UVB | |
|---|---|---|---|---|---|---|---|---|---|
| | | Haze | TLT | Haze | Δ | TLT | Δ¹ | | |
| 3 | 1 | 0.64 | 91.5 | 1.5 | 0.8 | 86.8 | 4.7 | - | - |
| 4 | 2 | 0.74 | 91.9 | 1.3 | 0.5 | 86.9 | 5.0 | - | - |
| 5 | 3 | 1.38 | 91.9 | 1.4 | 0.0 | 86.3 | 5.6 | - | - |
| 6 | 4 | 0.92 | 91.9 | 1.7 | 0.7 | 84.8 | 7.1 | - | - |
| 7 | 5² | 1.53 | 90.5 | 1.9 | 0.4 | 83.2 | 7.4 | 44 | 1 |
| 8 | 6 | 2.6 | 90.2 | 1.3 | -1.3 | 81.7 | 8.5 | 40 | 1 |
| 9 | 7 | 1.0 | 90.0 | 1.6 | 0.6 | 69.4 | 20.6 | 24 | 0 |
| 10 | 8 | 1.4 | 88.8 | 1.9 | 0.6 | 33.7 | 55.1 | 9 | 1 |
| 11 | 9 | 1.5 | 89.7 | 4.0 | 2.5 | 20.2 | 69.5 | 7 | 0 |
| 12 | 10 | 1.5 | 90.1 | 2.9 | 1.5 | 13.7 | 76.4 | 5 | 0 |
| 13 | 15 | 1.3 | 94.6 | 4.5 | 3.2 | 1.9 | 92.7 | - | - |

| | | | | | | | | | |
|---|---|---|---|---|---|---|---|---|---|
| ¹ - TLT pre tinting less TLT post tinting. | | | | | | | | | |
| ² - average of two experiments | | | | | | | | | |

For the record, the TLT values (%) of Examples 7, 8, 9, 10, 11 and 12 were additionally determined by a different operator and reported as 85, 83, 61, 28, 20 and 12, respectively.

### Example 14

Additional compositions in accordance with the inventions were prepared and articles were molded therefrom. Modifying of molded articles by the process of the invention, using each of following performance additives, followed the inventive method. The following performance additives were used successfully:
BPI Black molecular dye, BPI Brown molecular dye, BPI Blue molecular dye, BPI Green molecular dye, BPI Red molecular dye, BPI Yellow molecular dye, Metanil Yellow and Nigrosine (both from C.I. Dye), Disperse Yellow (a crude non-ionic dye), Thionin (an ionic dye), Rhodamine B (a cationic dye) and amino-4-hydroxyanthroquinnone. Also used successfully were Tinuvin 329, a triazole based U.V. Stabilizer and Uvitex OB, an optical brightener.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A thermoplastic molding composition comprising a transparent resinous component selected from the group consisting of (i) a blend of (co)polycarbonate resin and (co)polycaprolacone, and (ii) a block or random carbonate-lactone copolymer containing carbonate and caprolactone structural units, said composition **characterized in that** it contains no photochromic dyes.

2. The thermoplastic molding composition of Claim 1 wherein the component is a blend containing about 1 to 40 percent of (co)polycapro-lactone and 99 to 60 percent of (co)polycarbonate, the percent, both occurrences being relative to the weight of the resinous component.

3. The thermoplastic molding composition of Claim 1 wherein the component is a blend containing about 5 to 35 percent of (co)poolycapro-lactone and 95 to 65 percent of (co)polycarbonate, the percent, both occurrences, being relative to the weight of the resinous component.

4. The thermoplastic molding composition of Claim 1 wherein the carbonate-lactone copolymer has a weight average molecular weight of at least 10,000 and contains 1 to 50 mole percent of structural units conforming to 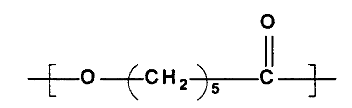 and 99 to 50 mole percent of structural units derived from (co)polycarbonate, the percent, both occurrences, being relative to the total moles of lactone and carbonate structural units.

5. A method of tinting a plastic article comprising
(i) molding an article of the composition of Claim 1, and
(ii) obtaining a dipping bath that contains a solution of a tinting agent, and
(iii) immersing said article in said dipping bath for a time and at a temperature designed to promote diffusion of said tinting agent into the near-surface regions of said article.

6. The method of Claim 5 wherein the composition contains a blend of (co)polycarbonate resin and (co) polycaprolacone.

7. The method of Claim 5 wherein the composition contains a block or random carbonate-lactone copolymer containing carbonate and caprolactone structural units.

8. The method of Claim 5 wherein the article is an optical lens.

9. The method of Claim 6 wherein the article is an optical lens.

10. The method of Claim 7 wherein the article is an optical lens.

11. The method of Claim 5 wherein the article is a member selected from the group consisting of a housing for a household appliance, a housing for a telephone, a housing for a computer and a lighting fixture.
